(19) **Europäisches Patentamt**

**European Patent Office**

**Office européen des brevets**

(11) **EP 1 394 569 B1**

(12) **FASCICULE DE BREVET EUROPEEN**

(45) Date de publication et mention
de la délivrance du brevet:
**03.11.2004 Bulletin 2004/45**

(51) Int Cl.⁷: **G01V 1/28**, G06T 17/20,
G06T 17/00

(21) Numéro de dépôt: **02292099.5**

(22) Date de dépôt: **26.08.2002**

(54) **Procédé de calcul de réalisations maillées d'un réservoir**

Verfahren zur Berechnung von Maschenmodellen eines Reservoirs

Method for calculating mesh models of a reservoir

(84) Etats contractants désignés:
**AT BE BG CH CY CZ DE DK EE ES FI FR GB GR
IE IT LI LU MC NL PT SE SK TR**

(43) Date de publication de la demande:
**03.03.2004 Bulletin 2004/10**

(73) Titulaire: **Total S.A.**
**92400 Courbevoie (FR)**

(72) Inventeurs:
• **Thore, Pierre**
**64000 Pau (FR)**

• **Robbe, Olivier**
**64018 Pau Cédex (FR)**

(74) Mandataire: **Cabinet Hirsch**
**58, avenue Marceau**
**75008 Paris (FR)**

(56) Documents cités:
**US-A- 4 821 164**    **US-A- 5 465 323**
**US-A- 5 844 564**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne le domaine de la géologie et plus particulièrement de l'exploration pétrolière.

Il est connu, notamment dans l'exploration pétrolière, de déterminer la position des réservoirs pétroliers à partir des résultats de mesures géophysiques effectuées depuis la surface ou dans des puits de forage. Ces mesures impliquent typiquement l'émission dans le sous-sol d'une onde et la mesure des diverses réflexions de l'onde sur les structures géologiques recherchées- surfaces séparant des matériaux distincts, failles, etc (technique de la sismique réflexion). D'autres mesures sont effectuées depuis des puits. On envoie alors dans le sous-sol, des ondes acoustiques, des rayonnements gamma ou des signaux électriques. Ces techniques impliquent le traitement des mesures pour reconstituer un modèle du sous-sol. Le traitement des mesures est affecté d'incertitudes de diverses natures. Pour la sismique réflexion :

Une première incertitude est l'incertitude de pointé. On appelle pointé pour des mesures géophysiques le suivi sur les images ou sur les sections sismiques successives fournies par traitement des mesures d'un marqueur sismique, par exemple un horizon géologique, pour définir une surface. Il est possible pour l'opérateur de confondre des marqueurs voisins ou encore d'associer des marqueurs qui ne font pas partie d'une même surface. L'incertitude de pointé peut être de quelques mètres à quelques dizaines de mètres; la valeur de quelques mètres correspond peu ou prou à la résolution, i.e. à la largeur des impulsions des signaux émis dans le sous-sol; la valeur de quelques dizaines de mètres correspond à une erreur de positionnement d'un marqueur sismique.

Une autre incertitude est l'incertitude sur le champ de vitesses dans le sous-sol. La remise en profondeur des mesures sismiques effectuées dans le domaine temps (cette remise en profondeur permet de passer d'une représentation temporelle à une représentation spatiale; la représentation temporelle est celle fournie par les instruments de mesure - qui mesurent typiquement les réflexions de l'onde émise. La représentation spatiale est obtenue à partir d'hypothèses sur le champ de vitesses dans le sous-sol. Elle suppose en effet des hypothèses sur la nature des matériaux traversés et sur la vitesse de propagation de l'onde dans ces matériaux. Or une hypothèse de champ de vitesse est affectée d'une incertitude. Cette incertitude sur le champ de vitesses peut conduire à des incertitudes de position de l'ordre de 50 mètres.

Une autre incertitude est l'incertitude due à la migration. On appelle "migration" dans ce domaine l'opération qui permet de repositionner correctement les évènements dans l'espace. L'incertitude sur la migration est fonction du contexte géologique; elle peut être quasiment nulle pour des structures tabulaires ou quasi-tabulaires et atteindre des centaines de mètres pour des structures complexes, comme des dômes de sel avec des parois verticales ou quasi-verticales.

La présence de structures particulières - des failles par exemple - atténuant la réflexion ou provoquant des diffractions de l'onde émise provoque encore d'autres incertitudes.

Il est possible de relever grâce aux mesures effectuées dans les puits les limites de structures géologiques. L'information ainsi obtenue est aussi entachée d'incertitudes; ces incertitudes proviennent essentiellement des mesures de position du puits.

Des incertitudes de calage sont dues au report des limites de structures géologiques mesurées dans le puits sur toute section sismique intersectant le puits; elles proviennent pour l'essentiel des problèmes de résolution.

FR-A-2 797 329 propose une méthode d'élaboration de cartes de probabilité de position d'impact d'un puits. Ce document contient une discussion des incertitudes liées aux migrations temps et profondeur et des erreurs de position correspondantes.

Compte tenu de ces incertitudes, le traitement de mesures géophysiques peut conduire à proposer plusieurs réalisations des structures du sous-sol. Pour des réservoirs - qui sont les structures recherchées par l'exploration pétrolière - on propose des surfaces représentatives du toit du réservoir, de la base du réservoir et d'interfaces entre des couches intermédiaires. Une réalisation est alors constituée d'un ensemble possible de surfaces représentant le réservoir, correspondant à un ensemble d'hypothèses. Typiquement, en exploration pétrolière, on fournit jusqu'à 300 réalisations correspondant aux différentes hypothèses possibles. A titre indicatif, la fourniture d'une réalisation (dite réalisation de référence) à partir des résultats de mesures géophysiques est une opération qui même avec l'assistance d'un outil logiciel, correspond à un travail considérable, pouvant atteindre 1 mois/homme pour un spécialiste routiné; lorsque la sismique a été interprétée, la construction d'une description surfacique d'un réservoir peut prendre une semaine ou plus. La collection des incertitudes représente également une semaine, leur intégration dans un logiciel une journée et le calcul des réalisations quelques heures.. Sur une superficie globale de 20 $km^2$, une surface peut être représentée par des triangles de 100 m de côté, soit donc quelques milliers de points par surface. Une réalisation peut impliquer outre les surfaces du toit et de la base du réservoir, 1 à 5 surfaces intermédiaires.

FR-A-2 652 180 décrit un procédé de modélisation de surfaces. Il est suggéré d'utiliser une description informatique maillée des surfaces. A certains des noeuds de la surface maillée sont associées des contraintes - représentatives par exemple de la position connue de certains noeuds ou d'une incertitude donnée sur la position de certains noeuds. La description informatique de la surface est ensuite adaptée aux contraintes, en utilisant une méthode appelée "Discrete Smooth Interpolation" (DSI).

Par ailleurs, pour représenter les propriétés pétrophysiques d'un réservoir, on utilise une grille ou modèle volumique maillé, comme décrit dans le brevet US-A-4 821 164. Le procédé décrit dans ce document comprend des étapes de construction d'un plan séparé pour chacune des surfaces critiques limitant le volume et de construction de couches de cellules en fonction de la structure stratigraphique. Le modèle volumique maillé comprend ainsi un nombre de plan supérieur au nombre de surfaces critiques. La mise en oeuvre d'un tel modèle volumique implique aussi un travail conséquent. Un modèle volumique peut présenter de 200 000 à un million de points, sur une trentaine de plans successifs. La fourniture d'une grille peut représenter un travail de 1 à 2 mois/homme

EP-A-0 801 364 décrit une méthode pour générer un modèle volumique maillé d'une structure géologique. Il est proposé de modéliser les surfaces de la structure géologique. On procède ensuite à un fractionnement de la zone étudiée, puis à un maillage des chacun des macro-blocs issus du fractionnement. Le maillage implique une interpolation et un procédé itératif de relaxation du maillage pour s'adapter aux surfaces. Ce document, comme US-A-4 821 164, permet d'obtenir un maillage en trois dimensions pour une structure donnée.

Il existe donc un besoin d'une solution qui permette de fournir simplement, pour des réalisations obtenues à partir des mesures géophysiques, des grilles, autrement dit des modèles maillés des réalisations.

Dans un mode de réalisation, l'invention propose en conséquence un procédé de calcul d'une description maillée d'une réalisation d'un réservoir, la réalisation comprenant une pluralité des surfaces stratigraphiques, le procédé comprenant :

-   la fourniture

    -   d'une réalisation de référence du réservoir, la réalisation de référence comprenant une pluralité de surfaces stratigraphiques;
    -   d'une description maillée de référence pour la réalisation de référence; la description de référence comprenant une pluralité de plans dont certains décrivent les surfaces stratigraphiques chaque plan comportant une pluralité de points; et
    -   d'au moins deux surfaces stratigraphiques de la réalisation correspondant à deux surfaces stratigraphiques de la réalisation de référence;

-   pour deux points homologues des deux plans décrivant les deux surfaces stratigraphiques de la réalisation de référence

    -   le calcul des points sous-jacents des deux surfaces stratigraphiques de la réalisation de référence;
    -   le calcul des déplacements des points sous-jacents dans le passage des deux surfaces stratigraphiques de la réalisation de référence aux deux surfaces stratigraphiques correspondantes de la réalisation; les deux points sous-jacents déplacés constituant deux points homologues des plans de la description maillée décrivant les deux surfaces stratigraphiques de la réalisation;
    -   la fourniture de plans de la description maillée par interpolation entre les points homologues de ces deux plans.

Dans un mode de mise en oeuvre, les deux surfaces stratigraphiques de la réalisation comprennent la surface de toit et/ou la surface de base de la réalisation.

L'interpolation peut aussi comprendre, pour une autre surface stratigraphique de la réalisation et pour deux points homologues des plans de la description maillée, le calcul de l'intersection entre l'autre surface stratigraphique et une droite passant par les deux points homologues, l'intersection constituant un point du plan de la description maillée décrivant l'autre surface stratigraphique.

L'interpolation peut aussi comprendre, pour deux points homologues de deux plans de la description maillée décrivant des surfaces stratigraphiques adjacentes, la fourniture d'un point d'un autre plan sur la droite reliant ces deux points homologues, dans les mêmes proportions de longueur que dans la description maillée de référence.

Dans le cas où les plans de la description maillée de référence s'étendent entre deux plans décrivant des surfaces stratigraphiques adjacentes sont parallèles, l'interpolation peut comprendre, pour deux points homologues de ces deux plans, la fourniture d'un point d'un autre plan sur la droite reliant ces deux points homologues de sorte que les plans de la description maillée correspondant aux plans parallèles de la description maillée de référence soient parallèles.

La description maillée de référence peut aussi comprendre au moins un point irrégulier avec au moins deux positions; dans ce cas, le calcul d'un point irrégulier correspondant de la description maillée comprend :

-   la recherche de points réguliers de la description maillée de référence voisins d'une position du point irrégulier ;
-   le calcul d'une position du point irrégulier correspondant dans la description maillée à partir des déplacements des points réguliers voisins entre la description maillée de référence et la description maillée.

L'invention propose encore un programme de calcul d'une description maillée d'une réalisation d'un réservoir, la réalisation comprenant une pluralité de surfaces stratigraphiques, le programme comprenant :

- une routine d'introduction

    - d'une réalisation de référence du réservoir, la réalisation de référence comprenant une pluralité de surfaces stratigraphiques;
    - d'une description maillée de référence pour la réalisation de référence; la description de référence comprenant une pluralité de plans dont certains décrivent les surfaces stratigraphiques, chaque plan comportant une pluralité de points, et
    - d'au moins deux surfaces stratigraphiques de la réalisation correspondant à deux surfaces stratigraphiques de la réalisation de référence;

- une routine de calcul, pour deux points homologues des deux plans décrivant les deux surfaces stratigraphiques de la réalisation de référence

    - des points sous-jacents des deux surfaces stratigraphiques de la réalisation de référence;
    - des déplacements des points sous-jacents dans le passage des deux surfaces stratigraphiques de la réalisation de référence aux deux surfaces stratigraphiques correspondantes de la réalisation;
    - les deux points sous-jacents déplacés constituant deux points homologues des plans de la description maillée décrivant les deux surfaces stratigraphiques de la réalisation ;

- une routine de calcul de plans de la description maillée par interpolation entre les points homologues de ces deux plans.

Les routines peuvent aussi être adaptées à la mise en oeuvre des différentes variantes du procédé.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, une représentation schématique d'un réservoir avec les surfaces d'une réalisation;
- figure 2, une représentation schématique en coupe dans un plan vertical des surfaces de deux réalisations et des plans d'une grille de référence correspondant à l'une des réalisations;
- figures 3 à 6, un ordinogramme des étapes d'un procédé selon un premier mode de mise en oeuvre de l'invention;
- figure 7, une représentation schématique analogue à celle de la figure 2, montrant la grille calculée selon le procédé des figures 3 à 6;
- figure 8, une représentation schématique d'un noeud de faille dans une description maillée;
- figure 9, une représentation des étapes d'un procédé appliqué aux noeuds de faille dans un mode de réalisation de l'invention.

L'invention propose de déterminer la grille ou modèle maillé d'une réalisation à partir de la grille ou modèle maillé déjà déterminée pour les surfaces d'une autre réalisation. Elle repose sur la constatation que les différentes réalisations dérivent des mêmes données géophysiques et que les similitudes entre des réalisations sont suffisantes pour éviter de calculer à nouveau l'ensemble de la grille pour une nouvelle réalisation.

Les notations suivantes sont utilisées dans la suite de la description. On note $S^0_1$, $S^0_2$, ..., $S^0_n$, les surfaces d'une réalisation $R^0$, dite réalisation de référence, pour laquelle on dispose d'une grille. Dans cette réalisation de référence, $S^0_1$ est la surface de toit, $S^0_n$ est la surface de base et $S^0_i$, $1 < i < n$, sont les surfaces intermédiaires. Comme indiqué plus haut, n a une valeur typiquement comprise entre 3 et 7 - la réalisation présentant de 1 à 5 surfaces intermédiaires. On appelle dans la suite "couche" le volume s'étendant entre deux surfaces de la réalisation. Chaque surface $S^0_i$ peut être représentée par un ensemble de points $M^0_{ij}$.

On considère par exemple un repère dans lequel la direction z est la verticale orientée vers le bas, les directions x et y fournissant l'horizontale. Le nombre de points pour une surface peut typiquement atteindre plusieurs milliers. Comme expliqué plus haut, à chaque point peut être associée une ou plusieurs incertitudes, habituellement exprimées sous forme d'un vecteur. La représentation des surfaces de la réalisation de référence comme des autres réalisations est sans incidence sur le procédé décrit. On considère à titre d'exemple dans la suite une représentation des surfaces $S^0_i$ par des points $M^0_{ij}$.

La grille $G^0$ associée à la réalisation de référence est notée $G^0_1$, $G^0_2$, ..., $G^0_m$ et est qualifiée dans la suite de grille de référence. Dans cette notation $G^0_j$ désigne un plan de la grille. Un tel plan peut s'appuyer sur une surface $S^0_i$ de la réalisation; il peut aussi s'agir d'un plan s'étendant dans une couche entre deux surfaces de la réalisation. L'utilisation du terme "plan" n'implique en aucune façon que les "plans" $G^0_i$ présentent la structure géométrique d'un plan au sens classique de ce terme en mathématiques; en revanche, les "plans" $G^0_i$ présentent la structure topologique du plan au sens classique. La grille de référence est formée d'un ensemble de points $N^0_{g,h,i}$ de coordonnées $(u_g, v_h, w_i)$. Les points $(u_g, v_h, w_i)$ pour une valeur fixe de i représentant la modélisation de la surface $S^0_i$. Les indices g et h sont des indices entiers dont les valeurs sont fonction du nombre de points dans la grille pour le plan $G^0_i$. On comprend de cette notation que la grille présente pour chaque plan une topologie similaire. On notera que les points de plans voisins peuvent être confondus, par exemple lorsque les surfaces sous-jacentes sont en biseau et qu'une couche disparaît. La similitude entre les topologies des plans n'exclut donc pas une variété de la géométrie de ces plans.

Cette hypothèse d'homologie dans la modélisation simplifie les calculs, mais n'est en rien indispensable à la mise en oeuvre de l'invention. Deux points $(u_g, v_h, w_{i1})$ et $(u_g, v_h, w_{i2})$, pour deux valeurs i1 et i2 différentes peuvent être qualifiées d'homologues dans les surfaces $S^0_{i1}$ et $S^0_{i2}$; autrement dit, du point de vue géologique, ils correspondent à une sédimentation sur un même point. On appelle alors "pilier" un ensemble de points $(u_g, v_h, w_i)$, pour des valeurs g et h fixes et une valeur de i variant de 1 à m. Le pilier est noté $P^0_{g,h}$. Du point de vue qualitatif, un pilier est constitué d'un ensemble de points superposés suivant la direction de sédimentation - avant déformation éventuelle. Cette hypothèse sur la grille n'est pas indispensable à la réalisation de l'invention, comme décrit dans la suite; il s'agit toutefois d'un mode de réalisation correspondant à une grille fournie selon les solutions de l'état de la technique.

On note $S^k_1, S^k_2, ..., S^k_n$ les surfaces d'une autre réalisation $R^k$. La réalisation $R^k$ est représentée par des points, tout comme la réalisation de référence; dans cette première représentation, la surface $S^k_i$ est représentée par un ensemble de points $M^k_{ij}$, correspondant aux points $M^0_{ij}$. On peut aussi représenter la réalisation par l'ensemble des points $M^0_{ij}$ de la réalisation de référence, assorties d'un tirage des déplacements de chacun de ces points pour atteindre l'autre réalisation; cette deuxième représentation de l'autre réalisation correspond en fait à des valeurs corrélées des incertitudes aux différents points. Dans une représentation comme dans l'autre, il est possible de définir une homologie entre les points des deux réalisations : deux points des deux réalisations sont homologues dans la mesure où ils représentent le même point de la structure géologique sous-jacente, dans deux hypothèses correspondant aux deux réalisations. Pour la description de l'invention, on considère dans la suite la première représentation.

Comme expliqué plus haut, le problème de l'invention est de disposer d'une grille ou modèle maillé pour cette réalisation $R^k$. L'invention propose de fournir cette grille à partir de la grille de référence $G^0$.

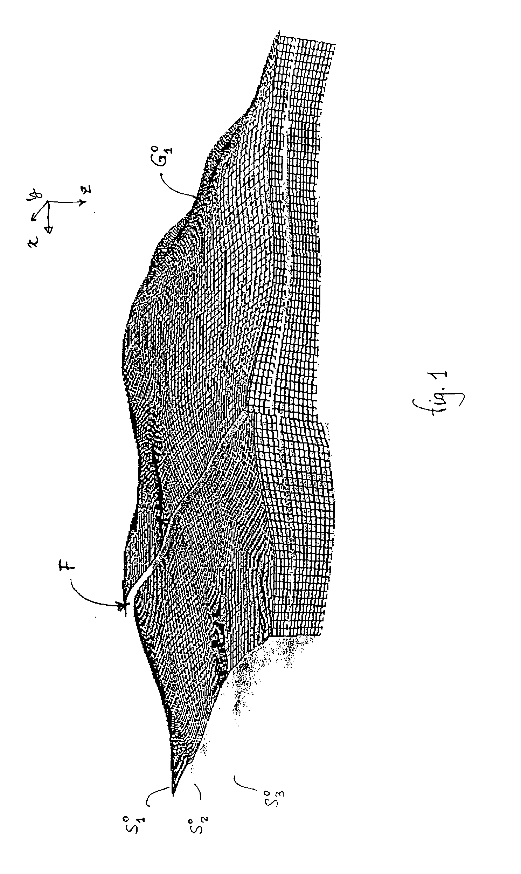

La figure 1 montre une représentation schématique d'un réservoir avec les surfaces de la réalisation de référence $R^0$. On a représenté sur la figure les axes x, y et z du repère, ainsi que les surfaces $S^0_1$, $S^0_2, ..., S^0_n$ de la réalisation $R^0$, dans un exemple avec le nombre n de surfaces limité à 3 pour des raisons de clarté de la figure. On a en outre représenté sur la figure 1 le maillage $G^0_1$ du plan s'appuyant sur la surface de toit $S^0_1$ de la réalisation; du fait que le plan $G^0_1$ s'appuie sur la surface $S^0_1$, celle-ci est difficilement visible sur la figure. La figure montre encore un plan de faille F traversant le réservoir; des détails sur les failles sont donnés plus bas. Enfin, on a représenté, mais uniquement sur le bord du réservoir situé sur l'avant dans la vue en perspective de la figure 1, les plans $G^0_2$ à $G^0_m$, en traçant les piliers correspondants. Pour la clarté de la figure, on n'a pas représenté les autres points de ces plans.

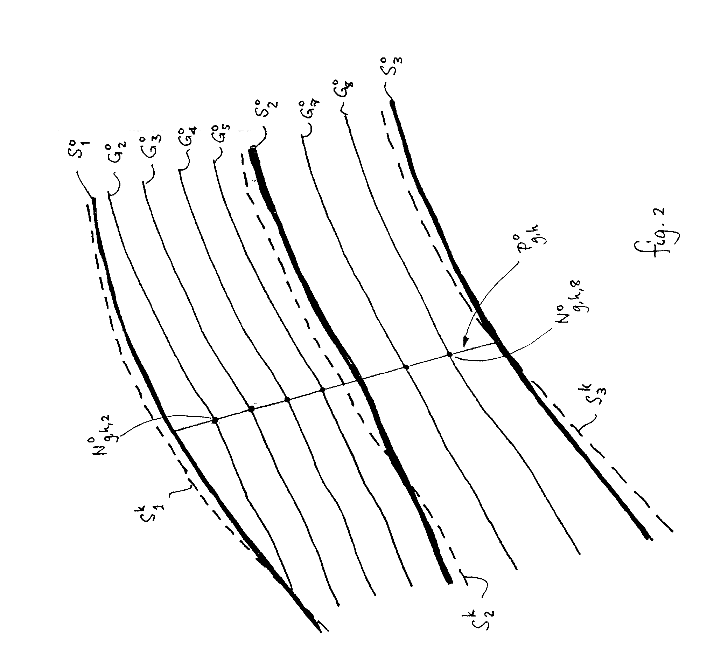

La figure 2 montre une représentation schématique en coupe dans un plan vertical des surfaces de deux réalisations et des plans d'une grille de référence; dans une situation réelle, il n'y a aucune raison pour que les points des surfaces ou les points de la grille soient dans un plan comme celui de la figure 2. La figure 2 n'est donc pas représentative de ce point de vue d'une situation réelle, mais n'a pour but que de permettre l'explication.

La figure 2 montre un exemple simple d'une réalisation de référence R° présentant deux couches définies par les surfaces $S^0_1$, $S^0_2$ et $S^0_3$. Ces surfaces sont représentées en gras sur la figure 2. La grille de référence $G^0$ présente neuf plans $G^0_1$ à $G^0_9$. Les plans $G^0_1$, $G^0_6$ et $G^0_9$ "s'appuient" sur les surfaces $S^0_1$, $S^0_2$ et $S^0_3$, autrement dit sont des modélisations de ces surfaces; ils ne sont pas montrés sur la figure pour des raisons de clarté, dans la mesure où ils sont très proches des surfaces sur lesquelles ils s'appuient. Les plans $G^0_2$ à $G^0_5$ sont des plans intermédiaires, dans la couche définie entre les surfaces $S^0_1$ et $S^0_2$; dans cette couche, les plans sont parallèles à la surface inférieure de la couche, ce qui correspond à une hypothèse de sédimentation sur la couche $S^0_2$ et d'érosion par la couche $S^0_1$. Les plans $G^0_7$ et $G^0_8$ sont des plans intermédiaires, dans la couche définie entre les surfaces $S^0_2$ et $S^0_3$; dans cette couche, les plans sont répartis de manière proportionnelle; ce qui correspond à une subsidence pendant la sédimentation. Autrement dit, les points d'un pilier sont régulièrement répartis dans la couche. La figure montre aussi la réalisation $R^k$; elle présente aussi trois surfaces $S^k_1$, $S^k_2$ et $S^k_3$, représentées en pointillés sur la figure 2. Ces surfaces sont proches des surfaces correspondantes de la réalisation de référence.

La figure montre encore un pilier $P^0_{g,h}$ de la grille de référence. Ce pilier est une droite, qui dans l'exemple passe dans le plan de la figure. On n'a référencé sur la figure que les points $N^0_{g,h,2}$ et $N^0_{g,h,8}$, pour plus de clarté.

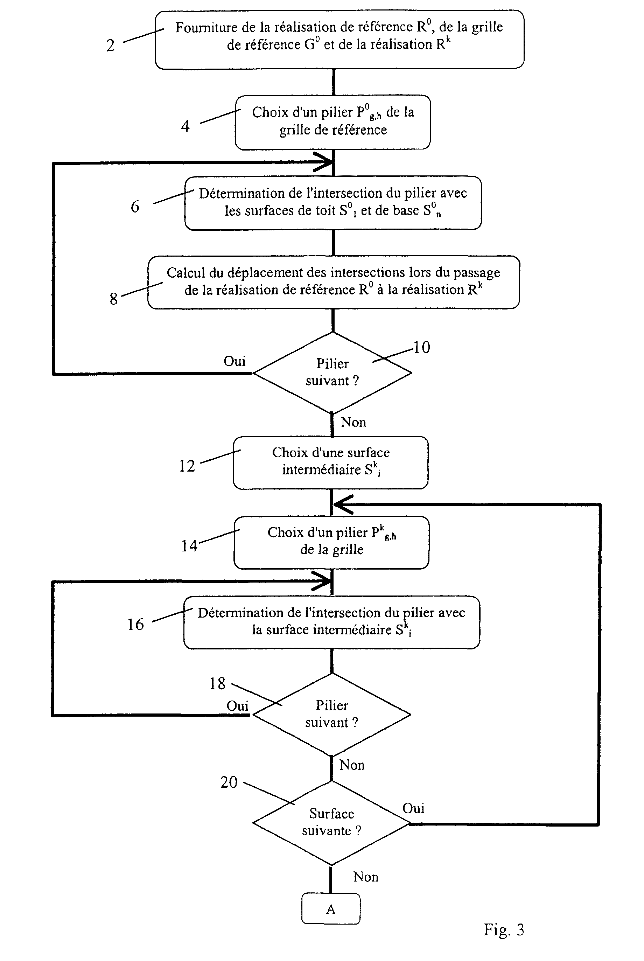

Comme expliqué plus haut, le problème de l'invention est de calculer ou définir à partir de la réalisation de référence $R^0$, de la grille de référence $G^0$ une grille pour la réalisation $G^k$. Le procédé qui permet de définir cette grille est expliqué en référence aux figures 3 à 6, en utilisant les éléments de la figure 2.

Les figures 3 à 6 montrent un ordinogramme des étapes d'un procédé selon un premier mode de mise en oeuvre de l'invention. Dans ce mode de réalisation, les piliers $P^0_{g,h}$ sont des droites. Cette caractéristique correspond à une contrainte de construction de la grille, qui est utile pour permettre l'utilisation de logiciels de calculs d'écoulement de fluide dans le réservoir.

Sur la figure 3, à la première étape 2, on fournit la réalisation de référence $R^0$, la grille de référence $G^0$ associée à cette réalisation, ainsi que la réalisation $R^k$ pour laquelle on souhaite obtenir une nouvelle grille. Cette étape rappelle les éléments de départ du procédé.

A l'étape suivante 4, on considère un pilier $P^0_{g,h}$ de la grille $R^0$; par exemple on peut considérer lors de la première itération le pilier $P^0_{1,1}$.

Aux étapes 6 et 8, on détermine un déplacement de ce pilier, lorsque l'on passe de la réalisation $R^0$ à la réalisation $R^k$. On peut pour cela considérer le déplacement des intersections du pilier avec les surfaces de toit $S^0_1$ et de base $S^0_n$ lors du passage de la réalisation $R^0$ à la réalisation $R^k$. Les intersections du pilier avec les surfaces de toit $S^0_1$ et de base $S^0_n$ sont en fait les points de ces surfaces sous-jacents aux extrémités du pilier, autrement dit les points des surfaces qui sont représentés par les extrémités du pilier dans la réalisation $R^0$. On pourrait utiliser une autre méthode pour déterminer les points sous-jacents, par exemple en considérant le point de la surface le plus proche d'une extrémité du pilier.

A l'étape 6, on détermine l'intersection du pilier avec les surfaces de toit $S^0_1$ et de base $S^0_n$ dans la représentation de référence. On peut pour cela simplement considérer les extrémités du pilier, c'est-à-dire les points $N^0_{g,h,1}$ et $N^0_{g,h,n}$ et calculer les intersections $I^0_{g,h,1}$ et $I^0_{g,h,n}$ de la droite passant par ces deux points avec les surfaces $S^0_1$ et $S^0_n$. Si l'on utilise pour la représentation de la réalisation $R^0$ un maillage avec des faces triangulaires, ceci revient à déterminer l'intersection de la droite passant par les points $N^0_{g,h,1}$ et $N^0_{g,h,m}$ avec une des faces de la surface. Le point $I^0_{g,h,1}$ s'exprime comme un barycentre des trois sommets $M^0_{1r1}$, $M^0_{1,r2}$ et $M^0_{1,r3}$ de la face triangulaire de la surface $S^0_1$ traversée par le pilier, avec des coefficients $\alpha_1$, $\beta_1$ et $\gamma_1$. Il en est de même pour le point $I^0_{g,h,m}$, avec des coefficients $\alpha_m$, $\beta_m$ et $\gamma_m$. Bien entendu, si les extrémités du pilier sont aussi des points de la surface, il suffit de considérer les points en cause - qui reste un barycentre avec des coefficients particuliers. Comme indiqué plus haut, on n'a pas, pour plus de clarté, porté à la figure 2 les points $I^0_{g,h,1}$ et $I^0_{g,h,9}$, ni les points correspondants de la surface.

A l'étape 8, on détermine le déplacement des points $I^0_{g,h,1}$ et $I^0_{g,h,n}$ lors du passage de la réalisation $R^0$ à la réalisation $R^k$. En d'autres termes, on considère les points de la réalisation $R^k$ qui correspondent aux points $I^0_{g,h,1}$ et $I^0_{g,h,n}$ ou sont homologues de ces points. Si les surfaces $S^k_i$ de la réalisation $R^k$ sont représentées par des points $M^k_{i,r}$ comme indiqué plus haut, le point $I^k_{g,h,1}$ de la surface de toit peut simplement être obtenu en considérant le barycentre des points $M^k_{1,r1}$, $M^k_{1,r2}$ et $M^k_{1,r3}$ affecté des mêmes coefficients $\alpha_1$, $\beta_1$ et $\gamma_1$. On procède de la même façon pour la surface de base, avec les coefficients correspondants. Dans cet exemple, on utilise les coordonnées barycentriques par rapport aux points les plus proches de la surface.

A l'issue de cette étape, on trouve donc des points $I^k_{g,h,1}$ et $I^k_{g,h,n}$ des surfaces de toit $S^k_1$ et $S^k_n$ de base de l'autre réalisation $R^k$. Ces points constituent les extrémités du pilier $P^k_{g,h}$ dans la grille $R^k$.

A l'étape 10, on passe au pilier suivant, et on recommence le procédé pour ce pilier suivant, en bouclant vers l'étape 6. La figure ne montre pas explicitement la sortie de la boucle, lorsque tous les piliers ont été traités; elle ne montre pas non plus la façon de parcourir l'ensemble des piliers, qui peut être quelconque.

Après avoir parcouru la boucle pour l'ensemble des piliers, on a défini les points $N^k_{g,h,1}$ et $N^k_{g,h,m}$ formant les plans $Q^k_1$ et $G^k_m$ s'appuyant sur les surfaces de toit et de base de l'autre réalisation. On a donc déterminé simplement à partir

- des surfaces $S^0_1$ et $S^0_n$ de toit et de base de la réalisation de référence,
- des plans $G^0_1$ et $G^0_n$ s'appuyant sur ces surfaces et
- des surfaces $S^k_1$ et $S^k_n$ de toit et de base de l'autre réalisation,

les plans $G^k_1$ et $G^k_m$ s'appuyant sur les surfaces de toit et de la base de l'autre réalisation $R^k$.

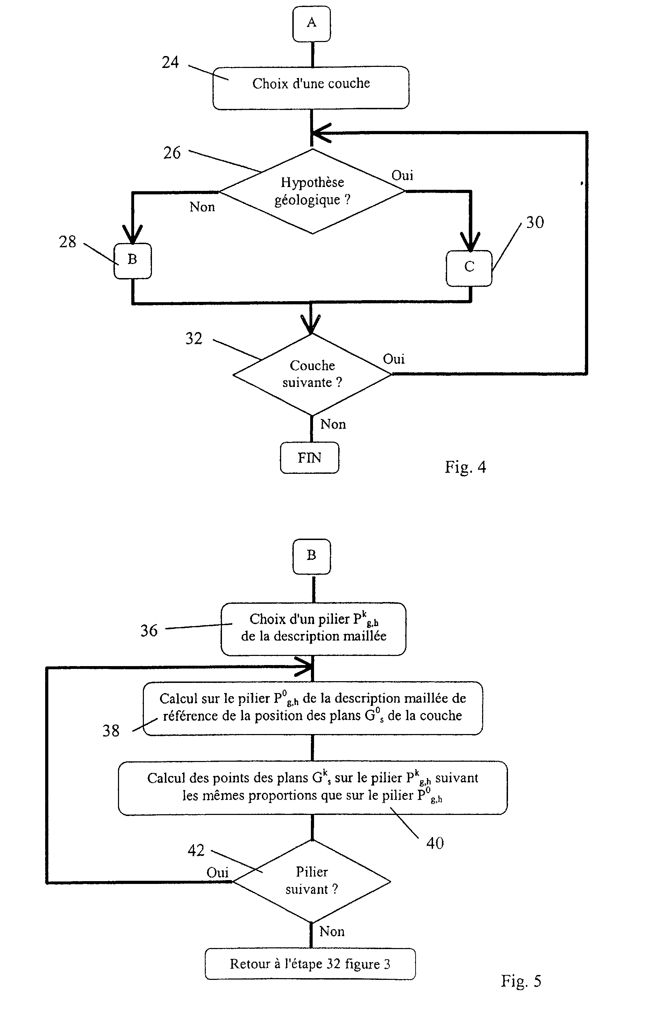

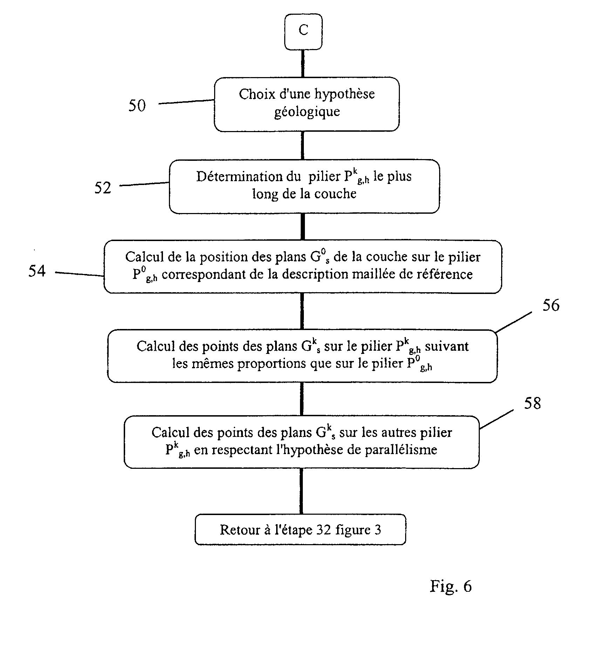

Aux étapes 12 à 58, on détermine à partir des plans de la grille s'appuyant sur les surfaces de toit et de base de l'autre réalisation $R^k$ les plans intermédiaires de la grille $R^k$. La figure 3 et 4 ainsi que les figures 5 et 6 montrent différentes solutions possibles pour interpoler les plans intermédiaires. La première solution, représentée sur la partie inférieure de la figure 3, s'applique aux plans intermédiaires s'appuyant sur des surfaces de la réalisation $R^k$. La deuxième solution, représentée sur la figure 5, s'applique aux plans définis à l'intérieur d'une couche, en mode proportionnel, comme dans la couche entre les surfaces $S^0_2$ et $S^0_3$ sur la figure 2. Ceci correspond à une tectonique synsédimentaire; la troisième solution, représentée sur la figure 6, s'applique aux plans définis à l'intérieur d'une couche, lorsque l'on souhaite que la grille $G^k$ reproduise une hypothèse géologique particulière présente dans la grille $G^0$ : il peut s'agir comme sur la couche entre les surfaces $S^0_1$ et $S^0_2$ sur la figure 2 d'une érosion (mode "On Lap" : érosion) ou encore de plans parallèles à la surface de toit, dans une hypothèse dite "Top Lap", c'est-à-dire transgression-régression.

La partie inférieure de la figure 3, étapes 12 à 22, permet de définir les plans de la grille $G^k$ s'appuyant sur les surfaces intermédiaires de la réalisation. A l'étape 12, on considère une surface intermédiaire $S^k_i$ de l'autre réalisation. Cette surface est homologue d'une surface $S^0_i$ de la réalisation de référence, sur laquelle s'appuie un plan $G^0_j$ de la grille de référence. On considère à l'étape 14 un pilier donné, par exemple le pilier $P^k_{g,h}$ de la grille $R^k$ : ce pilier est défini comme la droite - ou le segment de droite si les surfaces considérées aux étapes 4 à 10 sont la base et le toit-passant par deux points homologues $N^k_{g,h,1}$ et $N^k_{g,h,n}$.

A l'étape 16, on calcule l'intersection de ce pilier avec la surface intermédiaire $S^k_i$. On peut procéder comme expliqué plus haut à l'étape 6. Cette intersection est considérée comme le point $N^k_{g,h,j}$ du plan $G^k_j$ s'appuyant sur la surface intermédiaire $S^k_i$.

A l'étape 18, on passe au pilier suivant, et on recommence le calcul pour ce pilier suivant, en bouclant vers l'étape 16. S'il n'y a plus de pilier suivant, on passe à l'étape 20. A l'étape 20, on considère la surface suivante et on boucle vers l'étape 14. S'il n'y a plus de surface suivante, on passe à l'étape 22.

Ces étapes fournissent simplement pour la surface intermédiaire $S^k_i$ le plan correspondant $G^k_j$ correspondant. Ce procédé préserve la propriété qu'un pilier de la description maillée $G^k$ est une droite. Cette propriété peut être utile, notamment pour permettre d'utiliser ensuite des logiciels d'écoulement de flux dans le réservoir. Elle préserve aussi une homologie entre les plans s'appuyant sur les différentes surfaces, autrement dit une similitude entre les topologies des surfaces. Le procédé des étapes 12 à 22 préserve aussi la rectitude des piliers.

Il est manifeste que le procédé des étapes 12 à 22 ne fonctionne que dans la mesure où l'étape 16 est possible - c'est-à-dire dans la mesure où il est possible de calculer l'intersection de la surface $S^k_i$ avec le pilier. Le procédé des étapes 12 à 22 est donc adapté pour fournir les plans de la grille $G^k$ s'appuyant sur les surfaces de cette réalisation. Dans la mesure où ces plans sont obtenus par intersection des piliers avec les surfaces, ils fournissent un modèle maillé précis des surfaces.

Il reste donc à calculer ou définir les plans intermédiaires de la grille $G^k$, qui ne s'appuient pas sur des surfaces intermédiaires de la réalisation $R^k$. Le procédé propose à cet effet deux solutions; il est avantageux, comme expliqué ci-dessous, de mettre en oeuvre des deux solutions, en fonction des couches rencontrées. On pourrait aussi ne mettre en oeuvre qu'une seule de ces deux solutions pour l'ensemble de la réalisation.

Sur la figure 4, à l'étape 24, on considère une couche - autrement dit deux surfaces adjacentes de la réalisation $R^k$, pour lesquelles on dispose déjà des plans correspondants de la grille, définis aux étapes 12 à 22. On peut considérer lors de la première itération la première couche, entre les surfaces $S^0_1$ et $S^0_2$.

A l'étape 26 suivante, on détermine le mode d'interpolation des plans de la couche. Dans le cas d'une interpolation géologique, on passe à l'étape 30 et dans le cas d'une interpolation homothétique, on passe à l'étape 28. La définition respective des plans de la couche aux étapes 28 et 30 est représentée sur les figures 5 et 6.

A l'étape 32, les plans de la couche ont été définis. S'il existe encore une couche à traiter, on passe à la couche suivante, en bouclant vers l'étape 26. Sinon, le procédé est terminé.

Comme indiqué plus haut, l'intérêt de l'ordinogramme de la figure 4 est de proposer des solutions alternatives pour le calcul par interpolation des plans intermédiaires. On pourrait aussi ne choisir qu'une solution appliquée à toutes les couches définies entre les surfaces de la réalisation $R^k$.

La figure 5 montre une solution d'interpolation des plans intermédiaires, dans une hypothèse où les plans intermédiaires de la réalisation $R^k$ dans la couche en cause sont homothétiques des plans intermédiaires de la couche en cause dans la réalisation de référence $R^0$. La figure 5 correspond à l'étape 28 de la figure 4. La solution de la figure 5 repose sur la définition des plans $G^k_i$ de la description maillée $G^k$ dans les mêmes proportions que dans la description maillée de référence $G^0$. Autrement dit, on importe dans la description maillée $G^k$ les positions relatives des plans $G^0_i$ de la couche en cause dans la description maillée de référence $G^0$. La solution des étapes 36 à 42 est décrite pour une couche, entre deux plans $G^k_p$ et $G^k_q$ s'appuyant sur deux surfaces $S^k_i$ et $S^k_{i+1}$ de la réalisation $R^k$. Dans l'exemple de la figure 2, on considère la couche s'étendant entre les surfaces $S^k_2$ et $S^k_3$, sur lesquelles s'appuient les plans $G^k_6$ et $G^k_9$.

On considère à l'étape 36 un pilier donné, par exemple le pilier $P^k_{g,h}$ de la grille $R^k$ : ce pilier est défini dans la couche considérée comme le segment de droite s'étendant entre les points $N^k_{g,h,p}$ et $N^k_{g,h,q}$ des plans $G^k_p$ et $G^k_q$. A la première itération de la boucle de la figure 4, on peut simplement considérer le pilier $P^k_{1,1}$.

A l'étape 38, on calcule, pour le pilier correspondant $P^0_{g,h}$ dans la description maillée de référence $G^0$, la position des points $N^0_{g,h,t}$, $p < t < q$, des plans de la grille de référence s'étendant à l'intérieur de la couche en cause dans la grille de référence. La position des différents points est donnée par exemple par le rapport des longueurs aux extrémités du segment, ou, ce qui est équivalent, par les coefficients du barycentre par rapport à ces extrémités. On pourrait aussi utiliser des coordonnées dans un repère orthonormé dont le vecteur unitaire relie les extrémités du pilier.

A l'étape 40, on définit les points $N^k_{g,h,t}$ sur le pilier $P^k_{g,h}$, de sorte à respecter sur ce pilier les mêmes proportions que sur le pilier $P^0_{g,h}$. Ceci s'effectue par un calcul des rapports de longueurs sur le segment $[N^k_{g,hp}, N^k_{g,h,q}]$, ou encore par un calcul du barycentre des extrémités du segment ou enfin par le calcul d'un vecteur. Cette étape permet de définir les points des différents plans de la couche sur le pilier. Dans l'exemple de la figure 2, on définit de la sorte les points $N^k_{g,h,7}$ et $N^k_{g,h,8}$, ces points divisant le segment $[N^k_{g,h,6}, N^k_{g,h,9}]$ dans les mêmes proportions que les points $N^0_{g,h,7}$ et $N^0_{g,h,8}$ divisent le segment $[N^0_{g,h,6}, N^0_{g,h,9}]$ dans la grille de référence.

On passe ensuite au pilier suivant, à l'étape 42, en bouclant vers l'étape 38. S'il n'existe pas de pilier suivant, on retourne à l'étape 32 de la figure 3.

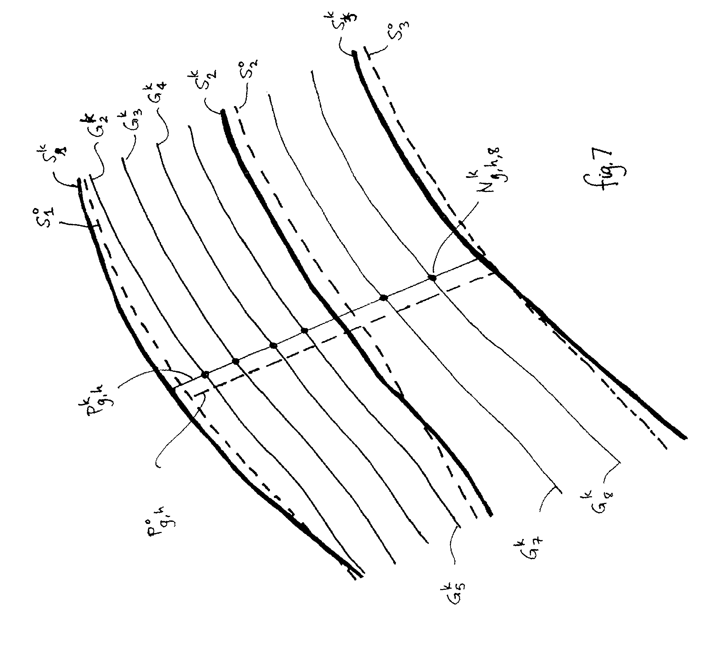

On arrive donc à définir les plans de la description maillée $G^k$ dans une couche entre les plans s'appuyant sur deux surfaces successives. Dans cette couche, les positions relatives des plans sont les mêmes que celles des plans correspondants dans la grille de référence. Ainsi, dans l'exemple de la figure 2, les plans $G^0_7$ et $G^0_8$ divisent chaque pilier en trois parties sensiblement égales dans la couche s'étendant dans la grille de référence entre les surfaces $S^0_2$ et $S^0_3$; il en est de même des plans $G^k_7$ et $G^k_8$ dans la couche s'étendant dans la grille $G^k$ entre les surfaces $S^k_2$ et $S^k_3$ ou les plans $G^k_6$ et $G^k_9$. Ceci est représenté à la figure 7.

Comme dans le cas de la figure 3, l'interpolation proposée à la figure 6 préserve l'homologie des topologies des plans intermédiaires; elle préserve aussi le caractère rectiligne des piliers.

La figure 6 montre une solution d'interpolation des plans intermédiaires, dans une hypothèse où les plans intermédiaires de la réalisation $R^k$ dans la couche en cause reproduisent la même hypothèse géologique que les plans intermédiaires de la couche en cause dans la réalisation de référence $R^0$. Cette figure correspond à l'étape 30 de la figure 4. On considère dans l'exemple de la figure 6 deux hypothèses géologiques, à savoir

- des plans intermédiaires parallèles au plan inférieur de la couche en cause; ou
- des plans intermédiaires parallèles au plan supérieur de la couche en cause.

La première hypothèse correspond à une sédimentation sur la surface sur laquelle s'appuie le plan inférieur et le cas échéant à une érosion en surface. La deuxième hypothèse correspond à une sédimentation avec une régression ou transgression marine. Sur la figure 2, la couche entre les surfaces $S^0_1$ et $S^0_2$ présente des plans parallèles $G^0_2$ à $G^0_5$ parallèles au plan inférieur $G^0_6$ s'appuyant sur la surface $S^0_2$; la répartition des plans dans la couche correspond à la première hypothèse géologique proposée plus haut.

La solution de la figure 6 repose donc sur la définition des plans $G^k_i$ de la description maillée $G^k$ de l'autre réalisation $R^k$, de sorte à respecter aussi dans la couche en cause les mêmes hypothèses géologiques que dans la description maillée de référence $G^0$. Autrement dit, pour les hypothèses géologiques de parallélisme considérées, on importe dans la description maillée $G^k$ les contraintes de parallélisme des plans $G^0_i$ de la couche en cause dans la description maillée de référence $G^0$.

La solution des étapes 36 à 42 est décrite pour une couche, entre deux plans $G^k_p$ et $G^k_q$ s'appuyant sur deux surfaces $S^k_i$ et $S^k_{i+1}$ de la réalisation $R^k$. Dans l'exemple de la figure 2, on considère la couche s'étendant entre les surfaces $S^k_1$ et $S^k_2$, sur lesquelles s'appuient les plans $G^k_1$ et $G^k_6$.

On considère à l'étape 50 une hypothèse géologique; dans l'exemple considéré ceci revient à choisir celui des plans supérieur et inférieur de la couche auquel les plans intermédiaires sont parallèles.

A l'étape suivante 52, on détermine le pilier le plus long de la couche. Ceci revient à maximiser sur l'ensemble des piliers la longueur du segment $[N^k_{g,h,p}, N^k_{g,h,q}]$. On trouve le pilier $P^k_{g,h}$ le plus long.

On interpole ensuite les plans intermédiaires sur le pilier le plus long. On peut simplement répartir sur le pilier le plus long de façon régulière les points $N^k_{g,h,t}$, $p < t < q$, des plans intermédiaires; alternativement, comme représenté à l'étape 54, on peut rechercher la position des points $N^0_{g,h,t}$, $p < t < q$ sur le pilier de la grille de référence $P^0_{g,h}$ correspondant au pilier le plus long. A l'étape 56, on définit les points $N^k_{g,h,t}$ sur le pilier $P^k_{g,h}$, de sorte à respecter sur ce pilier les mêmes proportions que sur le pilier $P^0_{g,h}$. Ceci peut s'effectuer comme expliqué en référence à l'étape 40 de la figure 5.

A l'étape 58, on calcule les points $N^k_{g',h',t}$ sur les autres piliers $P^k_{g',h'}$, avec $(g', h')$ différent de $(g, h)$, de sorte à respecter l'hypothèse de parallélisme. Il suffit, dans l'exemple d'un parallélisme avec le plan s'appuyant sur la surface inférieure de la couche, que les distances entre un point d'un plan intermédiaire et le point du même pilier du plan inférieur soient égales pour tous les piliers, soit

$$d(N^k_{g',h',t}, N^k_{g',h',q}) = d(N^k_{g,h,t}, N^k_{g,h,q})$$

pour tout triplet $(t, g', h')$ vérifiant $p < t < q$ et $(g', h')$ différent de $(g, h)$. Il reste possible à cette étape qu'un plan soit confondu partiellement avec le plan de base ou de toit - par exemple si la longueur d'un pilier devient trop faible par rapport à la longueur du pilier le plus long. Le procédé de la figure 6 permet donc aussi de représenter des plans terminant en biseau.

Après l'étape 58, on retourne à l'étape 32 de la figure 3.

On arrive donc à définir les plans de la description maillée $G^k$ dans une couche entre les plans s'appuyant sur deux surfaces successives. Dans cette couche, le parallélisme des plans est identique au parallélisme des plans correspondants dans la grille de référence. Ainsi, dans l'exemple de la figure 2, les plans $G^0_2$ à $G^0_5$ sont parallèles au plan $G^0_6$ qui s'appuie sur la surface $S^0_2$. De même, les plans $G^k_2$ à $G^k_5$ sont parallèles au plan $G^0_6$ dans la grille $G^k$.

La figure 7 montre une représentation analogue à celle de la figure 2, sur laquelle on a représenté

- en traits pointillés, les trois surfaces $S^0_1$, $S^0_2$ et $S^0_3$ de la réalisation de référence $R^0$, ainsi que le pilier $P^0_{g,h}$;
- les trois surfaces $S^k_1$, $S^k_2$ et $S^k_3$ de la réalisation $R^k$ ainsi que la grille $G^k$ obtenue par le procédé décrit en référence aux figures 3 à 6, avec le pilier $P^k_{g,h}$.

On constate sur la figure que les plans intermédiaires dans la couche supérieure sont comme sur la figure 2 parallèles à la surface inférieure de la couche, tandis que les plans intermédiaires dans la couche inférieure sont régulièrement répartis dans cette couche. Encore une fois, la figure 2 comme la figure 7 correspondent à des exemples simples, dans lesquels les surfaces sont sensiblement planes et sensiblement parallèles: le procédé s'applique aussi pour des surfaces gauches ou des formes complexes.

Le procédé décrit aux figures 3 à 6 permet ainsi de calculer une description maillée $G^k$ d'une réalisation $R^k$, à partir

- d'une réalisation de référence $R^0$;
- d'une description maillée de référence $G^0$ de cette réalisation de référence; et
- d'au moins deux surfaces stratigraphiques $S^k_1$, $S^k_n$ de la réalisation $R^k$. Le procédé n'implique pas de calculer à nouveau toute la description maillée pour la nouvelle réalisation, mais suppose simplement la connaissance des points homologues des surfaces à l'intérieur d'une réalisation. Il suppose aussi un calcul de déplacement, c'est-à-dire une homologie de la représentation entre les diverses réalisations. Ceci est simplement assuré dans les exemples proposés plus haut, si les réalisations correspondent à des tirages d'incertitudes, ou encore si les réalisations présentent une même topologie.

Le calcul d'une nouvelle description maillée $G^k$ suivant le procédé de l'invention peut s'effectuer en quelques minutes de temps de calcul.

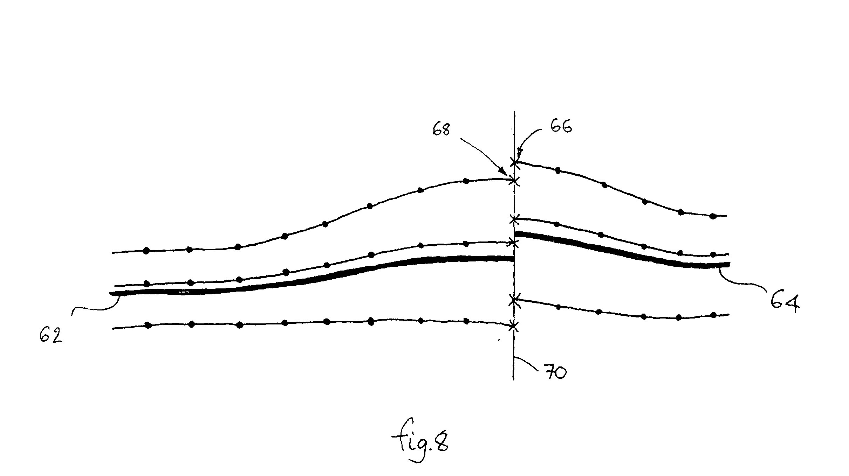

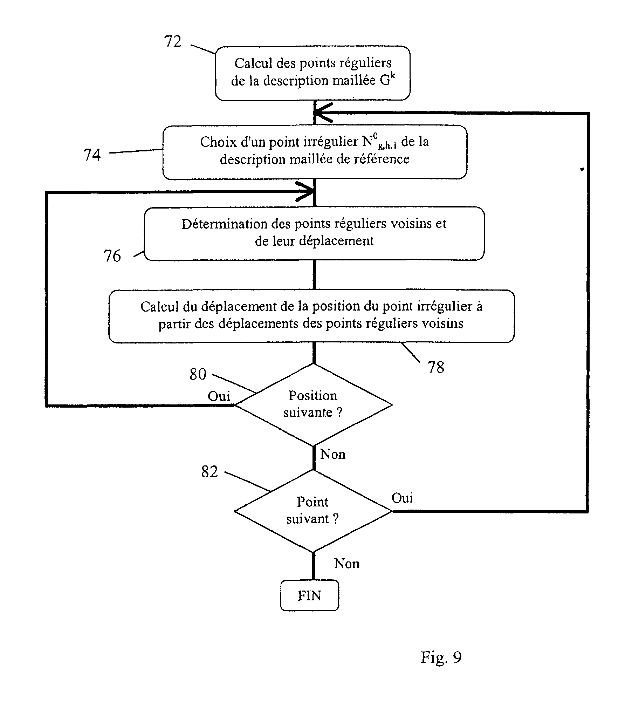

Le procédé décrit en référence aux figures 3 à 6 s'applique à toutes les surfaces et permet de fournir une description maillée. On décrit maintenant en référence aux figures 8 et 9 un mode de réalisation dans lequel on applique un traitement distinct à des points des surfaces définissant des failles. Le mode de réalisation de la figure 9 n'est pas obligatoire, mais permet d'obtenir une description maillée plus continue ou moins perturbée par les failles.

Le mode de réalisation des figures 8 et 9 repose sur l'existence, dans certaines descriptions maillées de surfaces, de points particuliers. Ces points sont représentatifs de failles ou de discontinuités dans la surface décrite. Pour rendre compte de ces discontinuités, la description maillée peut utiliser des points particuliers, qualifiés de "split nodes" ou noeuds de coupure. Un tel point de la modélisation peut présenter plusieurs positions géométriques correspondant à deux ou plusieurs panneaux de faille. La figure 8 montre une représentation schématique d'un noeud de faille dans une telle description maillée, dans un exemple où les points irréguliers présentent deux positions. On a représenté sur la figure une surface et trois plans de part et d'autre de la surface. La surface sous-jacente présente une faille séparant deux parties 62 et 64 de la surface; dans l'exemple, la faille est sensiblement verticale. Les points des plans autour de la partie 62 ou de la partie 64 sont dits réguliers; ils sont représentés dans l'exemple de la figure 8 par des points de forme circulaire sur les plans. Un point de la description maillée au niveau de la faille est appelé noeud ou point de coupure ou encore point irrégulier; il présente deux positions géométriques représentées par des croix sur la figure 8; l'une de ces positions est utilisée pour définir le bord d'une partie de la surface, tandis que l'autre position est utilisée pour définir l'autre partie de la surface. On a référencé sur la figure la première position 66 d'un point irrégulier, qui est utilisée pour définir le bord d'un plan sur un côté de la faille. L'autre position 68 du point irrégulier est utilisée pour définir le bord du plan sur l'autre côté de la faille. Les deux positions du point irrégulier sont sur la même surface réglée 70 définissant le panneau de faille

Le procédé de la figure 9 propose de prendre en compte de façon particulière les points irréguliers de la surface. Pour chacune des positions géométriques des points irréguliers, le déplacement est obtenu à partir du déplacement des points réguliers voisins. Cette solution permet, dans le modèle maillé obtenu, de mieux rendre compte des failles ou des irrégularités. En particulier, cette solution assure que le panneau de faille reste représenté par une surface réglée.

Le procédé de la figure 9 commence par un calcul des points réguliers de la description maillée $G^k$ de la réalisation $R^k$, suivant le procédé décrit en référence aux figures 3 à 6. L'étape 72 représentée sur la figure 9 est donc un calcul des points réguliers des descriptions maillées des plans $G^k_0$ et $G^k_m$ s'appuyant sur les surfaces de base et de toit $S^k_0$ et $S^k_n$, puis un calcul par interpolation des points réguliers des autres plans $G^k_i$.

A l'étape 74, on considère un point irrégulier. Ce point est caractérisé par au moins deux positions, comme expliqué en référence à la figure 8. Soit donc $N^0_{g,h,1}$ un point irrégulier, qui dans l'exemple fait partie du plan $G^0_1$ s'appuyant sur la surface de toit et $T^0_{g,h,1}$ et $U^0_{g,h,1}$ les deux positions de ce point.

A l'étape 76, on détermine, pour une position de ce point - par exemple pour la position $T^0_{g,h,1}$ lors de la première itération - les points réguliers voisins dans le plan $G^0_1$. On peut considérer les points réguliers les plus proches, ou considérer en outre d'autres points réguliers. On pourrait aussi considérer les positions voisines des points irréguliers, pour lesquels le déplacement a été calculé lors des itérations précédentes. Le nombre de points considéré à cette étape n'est pas essentiel - et on pourrait à la limite ne considérer qu'un point voisin.

A l'étape 78, on calcule le déplacement de la position du point irrégulier-autrement dit la position $T^k_{g,h,1}$ dans le plan $G^k_1$ à partir des déplacements des points réguliers voisins. On peut simplement effectuer une moyenne de ces déplacements, dans le cas le plus simple; on peut aussi pondérer les déplacements, par exemple en fonction des distances entre la position et les points réguliers voisins, ou suivant toute autre méthode. Dans le cas le plus simple, on procède à un simple calcul de la moyenne des déplacement et on trouve :

$$\overline{T^0_{g,h,1} T^k_{g,h,1}} \simeq \frac{\sum\limits_{p1,p2} \overrightarrow{N^0_{p1,p2,1} N^k_{p1,p2,1}}}{\sum\limits_{p1,p2} i}$$

avec $N^0_{p1,p2,1}$ les points réguliers voisins du point $N^0_{g,h,1}$, le terme au dénominateur représentant simplement le nombre de points réguliers considérés.

A l'issue de l'étape 78, on obtient donc la position d'un point irrégulier dans la description maillée $G^k_0$.

A l'étape 80, on passe à la position suivante du point irrégulier et on boucle vers l'étape 76. Si on a traité toutes les positions du point irrégulier en cause, on passe à l'étape 82.

A l'étape 82, on passe au point irrégulier suivant et on boucle vers l'étape 74. Si on a traité tous les points irréguliers, le procédé se termine.

Les étapes 72 à 82 permettent ainsi de générer les points irréguliers dans la description maillée $G^k$ de la réalisation $R^k$. Le traitement des positions des points irréguliers à partir des points réguliers voisins permet de préserver dans la description maillée $G^k$ les failles ou les autres irrégularités existant dans la description maillée de référence.

Le procédé des figures 3 à 6, comme celui de la figure 9, permet de garder pour les plans $G^0_k$ de la description maillée $G^k$ de toutes les réalisations $R^k$ une topologie similaire à la topologie de la description maillée $S^0$ de la réalisation de référence $R^0$. On rend ainsi compte du fait que la description maillée est calculée pour une réalisation $R^k$ similaire à la réalisation de référence : le procédé prend en compte et exploite l'homologie qui existe entre les réalisations. Dans la mesure où la propriété de rectitude des piliers est assurée pour les points réguliers, elle est aussi préservée pour les points irréguliers dans le procédé de la figure 9 - dans la mesure où l'on considère, pour un pilier formé de points irréguliers, les mêmes choix des points voisins dans chaque plan.

En particulier, le procédé de la figure 9 assure une bonne représentation des failles ou des irrégularités; les failles représentées par une surface réglée dans la description maillée de référence $G^0$ sont aussi représentées par une surface réglée dans la description maillée $G^k$ obtenue par le procédé.

Les procédés des figures 3 à 6 et 9 peuvent être mis en oeuvre par des programmes appropriés, avec des routines correspondant aux différentes étapes des procédés. La programmation de telles routines est à la portée de l'homme du métier, compte tenu des indications fournies plus haut en référence aux figures.

Afin de rendre la programmation de l'invention relativement aisée, il est préférable d'utiliser un langage de haut niveau, qui permette une programmation de type objet tel que le C++ ou le langage JAVA . Ce type de traitement est de préférence intégré à un modeleur ayant une description à la fois surfacique et maillée afin de connaître les relations topologiques entre les éléments tels que points, piliers, couches et surfaces. En outre les logiciels de type modeleur décrivent déjà les fonctionnalités de base telles que les calculs d'intersection. Le logiciel vendu par la société TSURF sous la marque GOCAD est un bon exemple de ce type d'environnement de programmation.

Bien entendu, la présente invention n'est pas limitée aux modes de réalisations décrits à titre d'exemple. Dans les exemples proposés, on utilise pour l'interpolation des piliers les surfaces de toit et de base de la réalisation. On pourrait aussi utiliser deux autres surfaces de cette réalisation. L'utilisation des surfaces de toit et de base présente l'avantage d'une distance maximale entre les surfaces, ce qui assure une précision optimale dans l'interpolation du pilier, pour une incertitude donnée dans le plan de la surface. Si l'on utilise ces surfaces de toit et de base, on peut en toute rigueur parler de surfaces intermédiaires, comme plus haut. Même si l'on n'utilise pas les surfaces de toit et de base, le procédé s'applique aussi aux surfaces situées au-dessus et au-dessous des surfaces utilisées - bien qu'il ne s'agisse pas à proprement parler de surfaces "intermédiaires".

Par ailleurs, dans l'ordinogramme de la figure 3, le procédé est expliqué avec un calcul pilier par pilier; on peut changer l'ordre des calculs proposés, par exemple en commençant par la recherche sur la surface de toit des points de passage des piliers, puis la recherche des points sur la surface de base et enfin l'interpolation des piliers.

L'étape 6 de l'ordinogramme de la figure 3 suppose aussi que le pilier est une droite; dans la mesure où le pilier n'est pas une droite, on peut considérer la projection des points $N^0_{g,h,1}$ et $N^0_{g,h,n}$ sur les surfaces $S^0_1$ et $S^0_n$, de la même manière que pour les calculs relatifs au toit et à la base tels que décrit à l'étape 8 et non pas l'intersection proposée à l'étape 6 de la figure 3. Cette considération s'applique naturellement pour les surfaces de faille qui ne sont pas nécessairement des surfaces réglées. En tout état de cause, on obtient les points $I^0_{g,h,1}$ et $I^0_{g,h,n}$ de la droite passant par ces deux points avec les surfaces $S^0_1$ et $S^0_n$.

Comme pour l'ordinogramme de la figure 3, on peut changer l'ordre des étapes de l'ordinogramme des autres figures, notamment pour ce qui est du balayage des surfaces et des points irréguliers.

Il n'est pas indispensable de mettre en oeuvre la solution de la figure 9 en l'absence de points irréguliers.

On rappelle encore que la modélisation utilisée pour les surfaces dans les différentes réalisations est sans incidence. Dans l'exemple, on a considéré des surfaces modélisées par des points; on a aussi considéré une collection de points pour chaque réalisation. On pourrait tout aussi bien modéliser les différentes réalisations en fournissant un ensemble de points pour la réalisation de référence $R^0$ et n ensembles de vecteurs d'incertitudes correspondants aux n autres réalisations. On obtient de la même façon une modélisation des surfaces des autres réalisations.

Le choix d'un mode d'interpolation dans une couche peut être une donnée de départ; il peut aussi être déduit de l'analyse de la position des plans dans la grille de référence.

## Revendications

1. Un procédé de calcul d'une description maillée ($G^k$) d'une réalisation ($R^k$) d'un réservoir, la réalisation comprenant une pluralité des surfaces stratigraphiques ($S^k_1$, $S^k_2$, ..., $S^k_n$), le procédé comprenant :

   - la fourniture (2)

     d'une réalisation de référence ($R^0$) du réservoir, la réalisation de référence comprenant une pluralité de surfaces stratigraphiques ($S^0_1$, $S^0_2$, ..., $S^0_n$);

     d'une description maillée de référence ($G^0$) pour la réalisation de référence; la description de référence comprenant une pluralité de plans ($G^0_1$), $G^0_2$, ..., $G^0_m$) dont certains décrivent les surfaces stratigraphiques ($S^0_1$, $S^0_2$, ..., $S^0_n$), chaque plan ($G^0_i$) comportant une pluralité de points ($N^0_{g,h,i}$); et

     d'au moins deux surfaces stratigraphiques ($S^k_1$, $S^k_n$) de la réalisation ($R^k$) correspondant à deux surfaces stratigraphiques ($S^0_1$, $S^0_n$) de la réalisation de référence;

   - pour deux points homologues ($N^0_{g,h,1}$ $N^0_{g,h,m}$) des deux plans ($G^0_1$, $G^0_m$) décrivant les deux surfaces stratigraphiques ($S^0_1$, $S^0_n$) de la réalisation de référence

     le calcul (6) des points ($I^0_{g,h,1}$ $I^0_{g,h,n}$) sous-jacents des deux surfaces stratigraphiques ($S^0_1$, $S^0_n$) de la réalisation de référence, le calcul des points sous-jacent comprenant la projection des points homologues ($N^0_{g,n,1}$, $N^0_{g,n,m}$) sur les surfaces stratigraphiques ($S^0_1$, $S^0_n$) ou la détermination des intersections de la droite passant par les points homologues ($N^0_{g,h,1}$ $N^0_{g,h,m}$) avec les surfaces stratigraphiques ($S^0_1$, $S^0_n$);

     le calcul (8) des déplacements des points sous-jacents dans le passage des deux surfaces stratigraphiques ($S^0_1$, $S^0_n$) de la réalisation de référence aux deux surfaces stratigraphiques correspondantes ($S^k_1$, $S^k_n$) de la réalisation ($R^k$);

     les deux points sous-jacents déplacés constituant deux points homologues des plans ($G^k_1$, $G^k_m$) de la description maillée ($G^k$) décrivant les deux surfaces stratigraphiques ($S^k_1$, $S^k_n$) de la réalisation ($R^k$);

   - la fourniture de plans ($G^k_i$) de la description maillée ($G^k$) par interpolation entre les points homologues de ces deux plans ($G^k_1$, $G^k_m$).

2. Le procédé de la revendication 1, **caractérisé en ce que** les deux surfaces stratigraphiques ($S^0_1$, $S^0_n$) de la réalisation ($R^k$) comprennent la surface de toit et/ou la surface de base de la réalisation.

3. Le procédé de la revendication 1 ou 2, **caractérisé en ce que** l'interpolation comprend, pour une autre surface stratigraphique ($S^k_i$) de la réalisation ($R^k$) et pour deux points homologues des plans ($G^k_1$, $G^k_m$) de la description maillée ($G^k$), le calcul (16) de l'intersection entre l'autre surface stratigraphique et une droite passant par les deux points homologues, l'intersection constituant un point du plan ($G^k_i$) de la description maillée ($G^k$) décrivant l'autre surface stratigraphique ($S^k_i$).

4. Le procédé de la revendication 1, 2 ou 3, **caractérisé en ce que** l'interpolation comprend, pour deux points homologues de deux plans ($G^k_p$, $G^k_q$) de la description maillée ($G^k$) décrivant des surfaces stratigraphiques ($S^k_i$, $S^k_{i+1}$) adjacentes, la fourniture (40) d'un point d'un autre plan sur la droite reliant ces deux points homologues, dans les mêmes proportions de longueur que dans la description maillée de référence.

5. Le procédé de la revendication 1, 2 ou 3, **caractérisé en ce que** des plans de la description maillée de référence s'étendant entre deux plans ($G^0_p$, $G^0_q$) décrivant des surfaces stratigraphiques adjacentes ($S^k_i$, $S^k_{i+1}$) sont parallèles, et **en ce que** l'interpolation comprend, pour deux points homologues de ces deux plans ($G^k_p$, $G^k_q$), la fourniture (54, 56) d'un point d'un autre plan sur la droite reliant ces deux points homologues de sorte que les plans de la description maillée correspondant aux plans parallèles de la description maillée de référence soient parallèles.

6. Le procédé de l'une des revendications 1 à 5, **caractérisé en ce que** la description maillée de référence ($G^0$) comprend au moins un point irrégulier ($N^0_{g,h,1}$) avec au moins deux positions ($T^0_{g,h,1}$, $U^0_{g,h,1}$) et **en ce que** le calcul d'un point irrégulier correspondant de la description maillée ($G^k$) comprend :

   - la recherche de points réguliers de la description maillée de référence voisins d'une position du point irrégulier ;
   - le calcul d'une position du point irrégulier correspondant dans la description maillée à partir des déplacements des points réguliers voisins entre la description maillée de référence ($G^0$) et la description maillée ($G^k$).

**7.** Un programme de calcul d'une description maillée ($G^k$) d'une réalisation ($R^k$) d'un réservoir, la réalisation comprenant une pluralité de surfaces stratigraphiques ($S^k_1$, $S^k_2$, ..., $S^k_n$), le programme comprenant :

- une routine d'introduction

    d'une réalisation de référence ($R^0$) du réservoir, la réalisation de référence comprenant une pluralité de surfaces stratigraphiques ($S^0_1$, $S^0_2$, ..., $S^0_n$);

    d'une description maillée de référence ($G^0$) pour la réalisation de référence; la description de référence comprenant une pluralité de plans ($G^0_1$, $G^0_2$, ..., $G^0_m$) dont certains décrivent les surfaces stratigraphiques ($S^0_1$, $S^0_2$, ..., $S^0_n$), chaque plan ($G^0_i$) comportant une pluralité de points ($N^0_{g,h,i}$); et

    d'au moins deux surfaces stratigraphiques ($S^k_1$, $S^k_n$) de la réalisation ($R^k$) correspondant à deux surfaces stratigraphiques ($S^0_1$, $S^0_n$) de la réalisation de référence;

- une routine de calcul, pour deux points homologues ($N^0_{g,h,1}$, $N^0_{g,h,m}$) des deux plans ($G^0_1$, $G^0_m$) décrivant les deux surfaces stratigraphiques ($S^0_1$, $S^0_n$) de la réalisation de référence

    des points ($I^0_{g,h,1}$, $I^0_{g,h,n}$) sous-jacents des deux surfaces stratigraphiques ($S^0_1$, $S^0_n$) de la réalisation de référence, le calcul des points sous-jacents comprenant la projection des points homologues ($N^0_{g,h,1}$, $N^0_{g,h,m}$) sur les surfaces stratigraphiques ($S^0_1$, $S^0_n$) ou la détermination des intersections de la droite passant par les points homologues ($N^0_{g,h,1}$ $N^0_{g,h,m}$) avec les surfaces stratigraphiques ($S^0_1$, $S^0_n$);

    des déplacements des points sous-jacents dans le passage des deux surfaces stratigraphiques ($S^0_1$, $S^0_n$) de la réalisation de référence aux deux surfaces stratigraphiques correspondantes ($S^k_1$, $S^k_n$) de la réalisation ($R^k$);

    les deux points sous-jacents déplacés constituant deux points homologues des plans ($G^k_1$, $G^k_m$) de la description maillée ($G^k$) décrivant les deux surfaces stratigraphiques ($S^k_1$, $S^k_n$) de la réalisation ($R^k$);

- une routine de calcul de plans ($G^k_i$) de la description maillée ($G^k$) par interpolation entre les points homologues de ces deux plans ($G^k_1$, $G^k_m$).

**8.** Le programme de la revendication 7, **caractérisé en ce que** les deux surfaces stratigraphiques de la réalisation ($R^k$) comprennent la surface de toit et/ou la surface de base de la réalisation.

**9.** Le programme de la revendication 7 ou 8, **caractérisé en ce que** la routine de calcul par interpolation est adaptée à effectuer, pour une autre surface stratigraphique ($S^k_i$) de la réalisation ($R^k$) et pour deux points homologues des plans ($G^k_1$, $G^k_m$) de la description maillée ($G^k$), le calcul de l'intersection entre l'autre surface stratigraphique et une droite passant par les deux points homologues, l'intersection constituant un point du plan ($G^k_j$) de la description maillée ($G^k$) décrivant l'autre surface stratigraphique ($S^k_i$).

**10.** Le programme de la revendication 7, 8 ou 9, **caractérisé en ce que** la routine de calcul par interpolation est adaptée à calculer, pour deux points homologues de deux plans ($G^k_p$, $G^k_q$) de la description maillée ($G^k$) décrivant des surfaces stratigraphiques ($S^k_i$, $S^k_{i+1}$) adjacentes, un point d'un autre plan sur la droite reliant ces deux points homologues, dans les mêmes proportions de longueur que dans la description maillée de référence.

**11.** Le programme de la revendication 7, 8 ou 9, **caractérisé en ce que** des plans de la description maillée de référence s'étendant entre deux plans ($G^0_p$, $G^0_q$) décrivant des surfaces stratigraphiques adjacentes ($S^k_i$, $S^k_{i+1}$) sont parallèles, et **en ce que** la routine de calcul par interpolation est adaptée à calculer, pour deux points homologues de ces deux plans ($G^k_p$, $G^k_q$), un point d'un autre plan sur la droite reliant ces deux points homologues de sorte que les plans de la description maillée correspondant aux plans parallèles de la description maillée de référence soient parallèles.

**12.** Le programme de l'une des revendications 7 à 11, **caractérisé en ce que** la description maillée de référence ($G^0$) comprend au moins un point irrégulier ($N^0_{g,h,1}$) avec au moins deux positions ($T^0_{g,h,1}$, $U^0_{g,h,1}$) et **en ce que** le programme comprend en outre une routine de calcul d'un point irrégulier correspondant de la description maillée ($G^k$), la dite routine de calcul comprenant :

- une sous-routine de recherche de points réguliers de la description maillée de référence voisins d'une position du point irrégulier ;
- le calcul d'une position du point irrégulier correspondant dans la description maillée à partir des déplacements des points réguliers voisins entre la description maillée de référence ($G^0$) et la description maillée ($G^k$).

**Patentansprüche**

1.  Berechnungsverfahren einer Maschenbeschreibung bzw. Maschenmodells $(G^k)$ einer Ausbildung bzw. eines Modells $(R^k)$ eines Reservoirs bzw. Vorrats, wobei die Realisierung bzw. das Modell eine Mehrzahl von stratigraphischen bzw. geschichteten Oberflächen $(S^k_1, S^k_2, ..., S^k_n)$ aufweist, wobei das Verfahren umfaßt:

    - die Bereitstellung (2)
      eines Bezugs- bzw. Referenzmodells $(R^0)$ des Reservoirs, wobei das Referenzmodell eine Mehrzahl von stratigraphischen Oberflächen $(S^0_1, S^0_2, ..., S^0_n)$ aufweist;
      einer Referenz-Maschenbeschreibung $(G^0)$ für das Referenzmodell; wobei die Beschreibung der Referenz eine Mehrzahl von Ebenen $(G^0_1, G^0_2, ..., G^0_m)$ umfaßt, von welchen bestimmte die stratigraphischen Oberflächen $(S^0_1, S^0_2, ..., S^0_n)$ beschreiben, wobei jede Ebene $(G^0_1)$ eine Mehrzahl von Punkten $(N^0_{g,h,1})$ umfaßt; und von wenigstens zwei stratigraphischen Oberflächen $(S^k_1, S^k_n)$ des Modells $(R^k)$, die zwei stratigraphischen Oberflächen $(S^0_1, S^0_n)$ des Referenzmodells entsprechen;
    - für zwei homologe Punkte $(N^0_{g,h,1}, N^0_{g,h,m})$ von zwei Ebenen $(G^0_1, G^0_m)$, die die zwei stratigraphischen Oberflächen $(S^0_1, S^0_n)$ des Referenzmodells beschreiben
      die Berechnung (6) von Punkten $(I^0_{g,h,1}, I^0_{g,h,n})$, die unter bzw. hinter den zwei stratigraphischen Oberflächen $(S^0_1, S^0_n)$ des Referenzmodells liegen, die Berechnung der darunterliegenden Punkte, die die Projektion der homologen Punkte $(N^0_{g,h,1}, N^0_{g,h,m})$ auf die stratigraphischen Oberflächen $(S^0_1, S^0_n)$ umfaßt, oder die Bestimmung der Schnitte der Geraden, die durch die homologen Punkte $(N^0_{g,h,1}, N^0_{g,h,m})$ hindurchtritt, mit den stratigraphischen Oberflächen $(S^0_1, S^0_n)$;
      die Berechnung (8) der Verlagerungen der darunterliegenden Punkte in dem Durchgang der zwei stratigraphischen Oberflächen $(S^0_1, S^0_n)$ des Referenzmodells auf zwei entsprechende stratigraphische Oberflächen $(S^k_1, S^k_n)$ des Modells $(R^k)$;

    wobei die zwei verlagerten darunterliegenden Punkte zwei homologe Punkte in den Ebenen $(G^k_1, G^k_m)$ der Maschenbeschreibung $(G^k)$ ausbilden, welche die zwei stratigraphischen Oberflächen $(S^k_1, S^k_n)$ des Modells $(R^k)$ beschreiben;

    - die Lieferung von Ebenen $(G^k_i)$ der Maschenbeschreibung $(G^k)$ durch Interpolation zwischen den homologen Punkten dieser zwei Ebenen $(G^k_1, G^k_m)$.

2.  Verfahren nach Anspruch 1, **dadurch gekennzeichnet, daß** die zwei stratigraphischen Oberflächen $(S^0_1, S^0_n)$ des Modells $(R^k)$ die Dachoberfläche und/oder die Basisoberfläche des Modells umfassen.

3.  Verfahren nach Anspruch 1 oder 2, **dadurch gekennzeichnet, daß** die Interpolation für eine andere stratigraphische Oberfläche $(S^k_i)$ des Modells $(R^k)$ und für zwei homologe Punkte der Ebenen $(G^k_1, G^k_m)$ der Maschenbeschreibung $(G^k)$ die Berechnung (16) des Schnitts zwischen der anderen stratigraphischen Oberfläche und einer Geraden umfaßt, die durch die zwei homologen Punkte geht, wobei der Schnitt einen Punkt der Ebene $(G^k_j)$ der Maschenbeschreibung $(G^k)$ ausbildet, die die andere stratigraphische Oberfläche $(S^k_i)$ beschreibt.

4.  Verfahren nach Anspruch 1, 2 oder 3, **dadurch gekennzeichnet, daß** die Interpolation für zwei homologe Punkte der zwei Ebenen $(G^k_p, G^k_q)$ der Maschenbeschreibung $(G^k)$, die die benachbarten stratigraphischen Oberflächen $(S^k_i, S^k_{i+1})$ beschreibt, die Lieferung (40) eines Punkts auf einer anderen Ebene auf der Geraden, welche diese zwei homologen Punkte verbindet, in denselben Längenverhältnissen wie die Referenz-Maschenbeschreibung, umfaßt.

5.  Verfahren nach Anspruch 1, 2 oder 3, **dadurch gekennzeichnet, daß** die Ebenen der Referenz-Maschenbeschreibung, die sich zwischen zwei Ebenen $(G^0_p, G^0_q)$ erstreckt, die benachbarte, stratigraphische Oberflächen $(S^k_i, S^k_{i+1})$ beschreiben, parallel sind und daß die Interpolation für zwei homologe Punkte dieser zwei Ebenen $(G^k_p, G^k_q)$ die Lieferung (54, 56) eines Punkts einer anderen Ebene auf der Geraden, die diese zwei homologen Punkte verbindet, derart umfaßt, daß die Ebenen der Maschenbeschreibung entsprechend der parallelen Ebenen der Referenz-Maschenbeschreibung parallel sind.

6.  Verfahren nach einem der Ansprüche 1 bis 5, **dadurch gekennzeichnet, daß** die Referenz-Maschenbeschreibung $(G^0)$ wenigstens einen irregulären bzw. unregelmäßigen Punkt $(N^0_{g,h,1})$ mit wenigstens zwei Positionen $(T^0_{g,h,1}, U^0_{g,h,1})$ umfaßt, und daß die Berechnung eines irregulären Punkts, der der Maschenbeschreibung $(G^k)$ entspricht, umfaßt:

    - die Suche von regelmäßigen bzw. regulären Punkten der Referenz-Maschenbeschreibung benachbart einer Position des irregulären Punkts;
    - die Berechnung einer Position des irregulären Punkts entsprechend der Maschenbeschreibung ausgehend von den Verlagerungen der benachbarten, regulären Punkte zwischen der Referenz-Maschenbeschreibung ($G^0$) und der Maschenbeschreibung ($G^k$).

7. Berechnungsprogramm einer Maschenbeschreibung bzw. Maschenmodells ($G^k$) einer Ausbildung bzw. eines Modells ($R^k$) eines Reservoirs bzw. Vorrats, wobei das Modell eine Mehrzahl von stratigraphischen bzw. geschichteten Oberflächen ($S^k_1$, $S^k_2$, ..., $S^k_n$) umfaßt, wobei das Programm umfaßt:

- eine Einführroutine
  eines Bezugs- bzw. Referenzmodells ($R^0$) des Reservoirs, wobei das Referenzmodell eine Mehrzahl von stratigraphischen Oberflächen ($S^0_1$, $S^0_2$, ..., $S^0_n$) aufweist;
  einer Referenz-Maschenbeschreibung ($G^0$) für das Referenzmodell; wobei die Beschreibung der Referenz eine Mehrzahl von Ebenen ($G^0_1$, $G^0_2$, ..., $G^0_m$) umfaßt, von welchen bestimmte die stratigraphischen Oberflächen ($S^0_1$, $S^0_2$, ..., $S^0_n$) beschreiben, wobei jede Ebene ($G^0_i$) eine Mehrzahl von Punkten ($N^0_{g,h,i}$) umfaßt; und
  von wenigstens zwei stratigraphischen Oberflächen ($S^k_1$, $S^k_n$) des Modells ($R^k$), die zwei stratigraphischen Oberflächen ($S^0_1$, $S^0_n$) des Referenzmodells entsprechen;
- eine Berechnungsroutine für zwei homologe Punkte ($N^0_{g,h,1}$, $N^0_{g,h,m}$) von zwei Ebenen ($G^0_1$, $G^0_m$), die die zwei stratigraphischen Oberflächen ($S^0_i$, $S^0_n$) des Referenzmodells beschreiben,
  für Punkte ($I^0_{g,h,1}$, $I^0_{g,h,n}$), die unter bzw. hinter den zwei stratigraphischen Oberflächen ($S^0_1$, $S^0_n$) des Referenzmodells liegen, wobei die Berechnung der darunterliegenden Punkte die Projektion der homologen Punkte ($N^0_{g,h,1}$, $N^0_{g,h,m}$) auf die stratigraphischen Oberflächen ($S^0_1$, $S^0_n$) oder die Bestimmung der Schnitte der Geraden, die durch die homologen Punkte ($N^0_{g,h,1}$, $N^0_{g,h,m}$) hindurchtritt, mit den stratigraphischen Oberflächen ($S^0_1$, $S^0_n$) umfaßt;
  für die Verlagerungen der darunterliegenden Punkte in dem Durchgang der zwei stratigraphischen Oberflächen ($S^0_1$, $S^0_n$) des Referenzmodells auf zwei entsprechende stratigraphische Oberflächen ($S^k_1$, $S^k_n$) des Modells ($R^k$);

  wobei die zwei verlagerten, darunterliegenden Punkte zwei homologe Punkte in den Ebenen ($G^k_1$, $G^k_m$) der Maschenbeschreibung ($G^k$) ausbilden, welche die zwei stratigraphischen Oberflächen ($S^k_1$, $S^k_n$) des Modells ($R^k$) beschreiben;

- eine Berechnungsroutine für Ebenen ($G^k_i$) der Maschenbeschreibung ($G^k$) durch Interpolation zwischen den homologen Punkten dieser zwei

Ebenen ($G^k_1$, $G^k_m$).

8. Programm nach Anspruch 7, **dadurch gekennzeichnet, daß** die zwei stratigraphischen Oberflächen des Modells ($R^k$) die Dachoberfläche und/ oder die Basisoberfläche des Modells umfassen.

9. Programm nach Anspruch 7 oder 8, **dadurch gekennzeichnet, daß** die Berechnungsroutine durch Interpolation adaptiert ist, um für eine andere stratigraphische Oberfläche ($S^k_i$) des Modells ($R^k$) und für zwei homologe Punkte der Ebenen ($G^k_1$, $G^k_m$) der Maschenbeschreibung ($G^k$) die Berechnung des Schnitts zwischen der anderen stratigraphischen Oberfläche und einer Geraden zu bewirken, die durch die zwei homologen Punkte geht, wobei der Schnitt einen Punkt der Ebene ($G^k_j$) der Maschenbeschreibung ($G^k$) ausbildet, die die andere stratigraphische Oberfläche ($S^k_i$) beschreibt.

10. Programm nach Anspruch 7, 8 oder 9, **dadurch gekennzeichnet, daß** die Berechnungsroutine durch Interpolation adaptiert ist, um für zwei homologe Punkte der zwei Ebenen ($G^k_p$, $G^k_q$) der Maschenbeschreibung ($G^k$), die die benachbarten stratigraphischen Oberflächen ($S^k_i$, $S^k_{i+1}$) beschreibt, einen Punkt auf einer anderen-Ebene auf der Geraden, welche diese zwei homologen Punkte verbindet, in denselben Längenverhältnissen wie die Referenz-Maschenbeschreibung zu berechnen.

11. Programm nach Anspruch 7, 8 oder 9, **dadurch gekennzeichnet, daß** die Ebenen der Referenz-Maschenbeschreibung, die sich zwischen zwei Ebenen ($G^0_p$, $G^0_q$) erstreckt, die benachbarte stratigraphischen Oberflächen ($S^k_i$ $S^k_{i+1}$) beschreiben, parallel sind und daß die Berechnungsroutine durch Interpolation für zwei homologe Punkte dieser zwei Ebenen ($G^k_p$, $G^k_q$) adaptiert ist, einen Punkt einer anderen Ebene auf der Geraden, die diese zwei homologen Punkte verbindet, derart zu berechnen, daß die Ebenen der Maschenbeschreibung entsprechend der parallelen Ebenen der Referenz-Maschenbeschreibung parallel sind.

12. Programm nach einem der Ansprüche 7 bis 11, **dadurch gekennzeichnet, daß** die Referenz-Maschenbeschreibung ($G^0$) wenigstens einen irregulären bzw. unregelmäßigen Punkt ($N^0_{g,h,1}$) mit wenigstens zwei Positionen ($T^0_{g,h,1}$, $U^0_{g,h,1}$) umfaßt, und daß das Programm darüber hinaus eine Routine zur Berechnung eines irregulären Punkts umfaßt, der der Maschenbeschreibung ($G^k$) entspricht, wobei die Berechnungsroutine umfaßt:

- eine Subroutine zur Suche von regelmäßigen bzw. regulären Punkten der Referenz-Maschenbeschreibung benachbart einer Position des irregulären Punkts;

- die Berechnung einer Position des irregulären Punkts entsprechend der Maschenbeschreibung ausgehend von den Verlagerungen der benachbarten, regulären Punkte zwischen der Referenz-Maschenbeschreibung ($G^0$) und der Maschenbeschreibung ($G^k$).

## Claims

1. A process for calculating a meshed description ($G^k$) of a realization ($R^k$) of a reservoir, the realization comprising a plurality of stratigraphic surfaces ($S^k_1$, $S^k_2,..., S^k_n$), the process comprising:

   - the provision (2)

     of a reference realization ($R^0$) of the reservoir, the reference realization comprising a plurality of stratigraphic surfaces ($S^0_1$, $S^0_2$, ..., $S^0_n$);

     of a meshed reference description ($G^0$) for the reference realization; the reference description comprising a plurality of planes ($G^0_1$, $G^0_2$, ..., $G^0_m$), some of which describe the stratigraphic surfaces ($S^0_1$, $S^0_2$, ..., $S^0_n$), each plane ($G^0_i$) comprising a plurality of points ($N^0_{g,h,i}$);

     of at least two stratigraphic surfaces ($S^k_1$, $S^k_n$) of the realization ($R^k$) corresponding to two stratigraphic surfaces ($S^0_1$, $S^0_n$) of the reference realization;

   - for two homologous points ($N^0_{g,h,1}$, $N^0_{g,h,m}$) of the two planes ($G^0_1$, $G^0_m$) describing the two stratigraphic surfaces ($S^0_1$, $S_2$,... $S^0_n$) of the reference realization;

     the calculation (6) of the points ($I^0_{g,h,1}$, $I^0_{g,h,n}$) underlying the two stratigraphic surfaces ($S^0_1$, $S^0_n$) of the reference realization;

     the calculation (8) of the displacements of the underlying points in the transit of the two stratigraphic surfaces ($S^0_1$, $S^0_n$) of the reference realization to the two corresponding stratigraphic surfaces ($S^k_1$, $S^k_n$) of the realization ($R^k$);

     the two displaced underlying points constituting two homologous points of the planes ($G^k_1$, $G^k_m$) of the meshed description ($G^k$) describing the two stratigraphic surfaces ($S^k_1$, $S^k_n$) of the realization ($R^k$);

   - the provision of planes ($G^k_i$) of the meshed description ($G^k$) by interpolation between the homologous points of these two planes ($G^k_1$, $G^k_m$).

2. The process of Claim 1, **characterized in that** the two stratigraphic surfaces ($S^0_1$, $S^0_n$) of the realization ($R^k$) comprise the top surface and/or the bottom surface of the realization.

3. The process of Claim 1 or 2, **characterized in that** the interpolation comprises, for another stratigraphic surface ($S^k_i$) of the realization ($R^k$) and for two homologous points of the planes ($G^k_1$, $G^k_m$) of the meshed description ($G^k$), the calculation (16) of the intersection between the other stratigraphic surface and a straight line passing through the two homologous points, the intersection constituting a point of the plane ($G^k_i$) of the meshed description ($G^k$) describing the other stratigraphic surface ($S^k_i$).

4. The process of Claim 1, 2 or 3, **characterized in that** the interpolation comprises, for two homologous points of two planes ($G^k_p$, $G^k_q$) of the meshed description ($G^k$) describing adjacent stratigraphic surfaces ($S^k_i$, $S^k_{i+1}$), the provision (40) of a point of another plane on the straight line joining these two homologous points, in the same length proportions as in the meshed reference description.

5. The process of Claim 1, 2 or 3, **characterized in that** planes of the meshed reference description extending between two planes ($G^0_p$, $G^0_q$) describing adjacent stratigraphic surfaces ($S^k_i$, $S^k_{i+1}$) are parallel, and **in that** the interpolation comprises, for two homologous points of these two planes ($G^k_p$, $G^k_q$), the provision (54, 56) of a point of another plane on the straight line joining these two homologous points so that the planes of the meshed description corresponding to the parallel planes of the meshed reference description are parallel.

6. The process of one of Claims 1 to 5, **characterized in that** the meshed reference description ($G^0$) comprises at least one irregular point ($N^0_{g,h,1}$) with at least two positions ($T^0_{g,h,1}$, $U^0_{g,h,1}$) and **in that** the calculation of a corresponding irregular point of the meshed description ($G^k$) comprises:

   - a search for regular points of the meshed reference description which neighbour a position of the irregular point;
   - the calculation of a position of the corresponding irregular point in the meshed description on the basis of the displacements of the neighbouring regular points between the meshed reference description ($G^0$) and the meshed description ($G^k$).

7. A program for calculating a meshed description ($G^k$) of a realization ($R^k$) of a reservoir, the realization comprising a plurality of stratigraphic surfaces ($S^k_1$, $S^k_2$, ..., $S^k_n$), the program comprising:

   - a routine for introducing

     a reference realization ($R^0$) of the reser-

voir, the reference realization comprising a plurality of stratigraphic surfaces ($S^0_1$, $S^0_2$, ..., $S^0_n$);

a meshed reference description ($G^0$) for the reference realization; the reference description comprising a plurality of planes ($G^0_1$, $G^0_2$, ..., $G^0_m$), some of which describe the stratigraphic surfaces ($S^0_1$, $S^0_2$, ..., $S^0_n$), each plane ($G^0_i$) comprising a plurality of points ($N^0_{g,h,i}$); and

at least two stratigraphic surfaces ($S^k_1$, $S^k_n$) of the realization ($R^k$) corresponding to two stratigraphic surfaces ($S^0_1$, $S^0_n$) of the reference realization;

- a routine for calculating, for two homologous points ($N^0_{g,h,1}$, $N^0_{g,h,m}$) of the two planes ($G^0_1$, $G^0_m$) describing the two stratigraphic surfaces ($S^0_1$, $S^0_n$) of the reference realization;

points ($I^0_{g,h,1}$, $I^0_{g,h,n}$) underlying the two stratigraphic surfaces ($S^0_1$, $S^0_n$) of the reference realization;

displacements of the underlying points in the transit of the two stratigraphic surfaces ($S^0_1$, $S^0_n$) of the reference realization to the two corresponding stratigraphic surfaces ($S^k_1$, $S^k_n$) of the realization ($R^k$);

the two displaced underlying points constituting two homologous points of the planes ($G^k_1$, $G^k_m$) of the meshed description ($G^k$) describing the two stratigraphic surfaces ($S^k_1$, $S^k_n$) of the realization ($R^k$);

- a routine for calculating planes ($G^k_i$) of the meshed description ($G^k$) by interpolation between the homologous points of these two planes ($G^k_1$, $G^k_m$).

8. The program of Claim 7, **characterized in that** the two stratigraphic surfaces of the realization ($R^k$) comprise the top surface and/or the bottom surface of the realization.

9. The program of Claim 7 or 8, **characterized in that** the routine for calculation by interpolation is adapted to perform, for another stratigraphic surface ($S^k_i$) of the realization ($R^k$) and for two homologous points of the planes ($G^k_1$, $G^k_m$) of the meshed description ($G^k$), the calculation of the intersection between the other stratigraphic surface and a straight line passing through the two homologous points, the intersection constituting a point of the plane ($G^k_j$) of the meshed description ($G^k$) describing the other stratigraphic surface ($S^k_i$).

10. The program of Claim 7, 8 or 9, **characterized in that** the routine for calculation by interpolation is adapted to calculate, for two homologous points of two planes ($G^k_p$, $G^k_q$) of the meshed description ($G^k$) describing adjacent stratigraphic surfaces ($S^k_i$, $S^k_{i+1}$), a point of another plane on the straight line joining these two homologous points, in the same length proportions as in the meshed reference description.

11. The program of Claim 7, 8 or 9, **characterized in that** planes of the meshed reference description extending between two planes ($G^0_p$, $G^0_q$) describing adjacent stratigraphic surfaces ($S^k_i$, $S^k_{i+1}$) are parallel, and **in that** the routine for calculation by interpolation is adapted to calculate, for two homologous points of these two planes ($G^k_p$, $G^k_q$), a point of another plane on the straight line joining these two homologous points so that the planes of the meshed description corresponding to the parallel planes of the meshed reference description are parallel.

12. The program of one of Claims 7 to 11, **characterized in that** the meshed reference description ($G^0$) comprises at least one irregular point ($N^0_{g,h,1}$) with at least two positions ($T^0_{g,h,1}$, $U^0_{g,h,1}$) and **in that** the program furthermore comprises a routine for calculating a corresponding irregular point of the meshed description ($G^k$), the said calculation routine comprising:

- a subroutine for searching for regular points of the meshed reference description which neighbour a position of the irregular point;
- the calculation of a position of the corresponding irregular point in the meshed description on the basis of the displacements of the neighbouring regular points between the meshed reference description ($G^0$) and the meshed description ($G^k$).

fig. 1

fig. 2

2 ——— Fourniture de la réalisation de référence $R^0$, de la grille de référence $G^0$ et de la réalisation $R^k$

4 ——— Choix d'un pilier $P^0_{g,h}$ de la grille de référence

6 ——— Détermination de l'intersection du pilier avec les surfaces de toit $S^0_1$ et de base $S^0_n$

8 ——— Calcul du déplacement des intersections lors du passage de la réalisation de référence $R^0$ à la réalisation $R^k$

10

Oui ◆ Pilier suivant ?

Non

12 ——— Choix d'une surface intermédiaire $S^k_i$

14 ——— Choix d'un pilier $P^k_{g,h}$ de la grille

16 ——— Détermination de l'intersection du pilier avec la surface intermédiaire $S^k_i$

18

Oui ◆ Pilier suivant ?

Non

20 ◆ Surface suivante ? Oui

Non

A

Fig. 3

A

24 — Choix d'une couche

26 — Hypothèse géologique ?

Oui

Non

28 — B

30 — C

32 — Couche suivante ?

Oui

Non

FIN

Fig. 4

B

36 — Choix d'un pilier $P^k_{g,h}$ de la description maillée

38 — Calcul sur le pilier $P^0_{g,h}$ de la description maillée de référence de la position des plans $G^0_s$ de la couche

Calcul des points des plans $G^k_s$ sur le pilier $P^k_{g,h}$ suivant les mêmes proportions que sur le pilier $P^0_{g,h}$

40

42 — Pilier suivant ?

Oui

Non

Retour à l'étape 32 figure 3

Fig. 5

**C**

50 — Choix d'une hypothèse géologique

52 — Détermination du pilier $P^k_{g,h}$ le plus long de la couche

54 — Calcul de la position des plans $G^0_s$ de la couche sur le pilier $P^0_{g,h}$ correspondant de la description maillée de référence

56 — Calcul des points des plans $G^k_s$ sur le pilier $P^k_{g,h}$ suivant les mêmes proportions que sur le pilier $P^0_{g,h}$

58 — Calcul des points des plans $G^k_s$ sur les autres pilier $P^k_{g,h}$ en respectant l'hypothèse de parallélisme

Retour à l'étape 32 figure 3

Fig. 6

fig.7

fig.8

72 — Calcul des points réguliers de la description maillée $G^k$

74 — Choix d'un point irrégulier $N^0_{g,h,i}$ de la description maillée de référence

76 — Détermination des points réguliers voisins et de leur déplacement

Calcul du déplacement de la position du point irrégulier à partir des déplacements des points réguliers voisins — 78

80 — Position suivante ? — Oui / Non

82 — Point suivant ? — Oui / Non

FIN

Fig. 9